# EUROPÄISCHE PATENTSCHRIFT

(11) **EP 3 710 339 B1**
(45) Veröffentlichungstag und Bekanntmachung des Hinweises auf die Patenterteilung: **10.08.2022**
(21) Anmeldenummer: 18796953.0
(22) Anmeldetag: 06.11.2018
(51) Int. Cl.: B62D 25/00, B62D 29/00

(54) **VORRICHTUNG ZUR VERSTÄRKUNG, ABDICHTUNG ODER DÄMPFUNG EINES STRUKTURELEMENTES**
DEVICE FOR REINFORCING, SEALING OR DAMPING OF A STRUCTURAL ELEMENT
DISPOSITIF DE RENFORCEMENT, D'ÉTANCHÉITÉ OU D'AMORTISSEMENT D'UN ÉLÉMENT STRUCTUREL

(30) Priorität: 14.11.2017 EP 17201685
(43) Veröffentlichungstag der Anmeldung: 23.09.2020
(73) Patentinhaber: Sika Technology AG, 6340 Baar (CH)
(72) Erfinder: RICHARDSON, Brett, Royal Oak, Michigan 48073 (US); LANORE, Larry, Dryden, Michigan 48428 (US)
(74) Vertreter: Sika Patent Attorneys
(86) Internationale Anmeldenummer: PCT/EP2018/080251
(87) Internationale Veröffentlichungsnummer: WO 2019/096618

(56) Entgegenhaltungen:
- EP-A2- 1 391 368
- WO-A1-01/83206

## Beschreibung

Die Erfindung betrifft eine Vorrichtung zur Verstärkung, Abdichtung oder Dämpfung eines Strukturelementes mit einem Träger und einem expandierbaren Klebstoff. Sie betrifft des Weiteren ein System mit einem Strukturelement und einer darin angeordneten Vorrichtung zur Verstärkung, Abdichtung oder Dämpfung des Strukturelementes.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

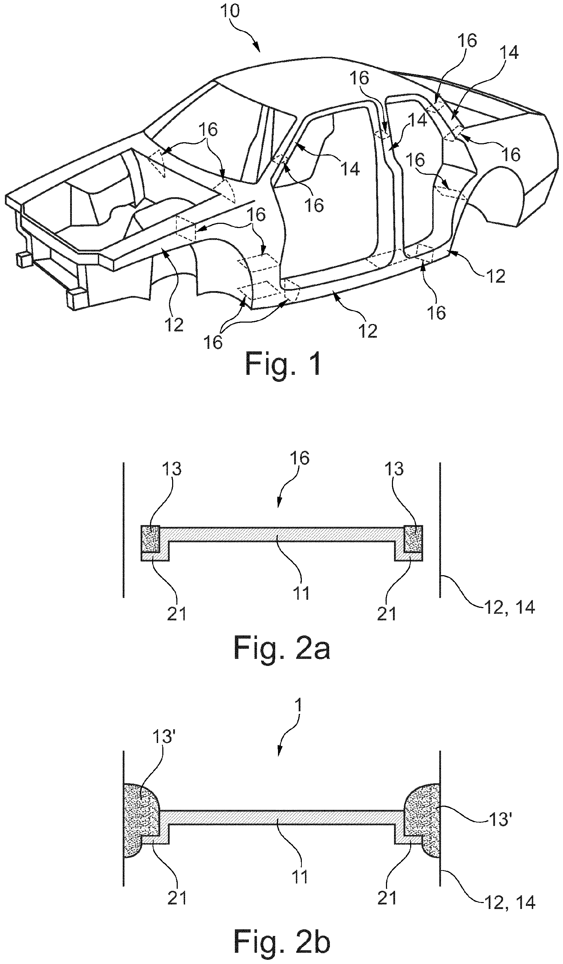

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a eine Vorrichtung 16 vor einer Expansion eines expandierbaren Materials 13. Fig. 2b zeigt dieselbe Vorrichtung 16 als Bestandteil des Systems 1, jedoch nach einer Expansion des expandierbaren Materials 13, also mit dem expandierten Material 13'.

Die Vorrichtung 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Die Vorrichtung 16 umfasst einen Träger 11, welches einen Randbereich 21 hat. Das expandierbare Material 13 ist dabei im Wesentlichen auf diesem Randbereich 21 des Trägers 11 angeordnet.

Vor der Expansion des expandierbaren Materials 13 besteht zwischen der Vorrichtung 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird das expandierbare Material 13 üblicherweise durch eine Wärmeeinwirkung expandiert, wobei das expandierte Material 13' dadurch den Spalt zwischen der Vorrichtung 16 und dem Strukturelement 12, 14 schliesst. Zudem wird durch die Expansion des expandierbaren Materials 13 auch zugleich eine Fixierung der Vorrichtung 16' im Strukturelement 12, 14 erreicht. Eine derart im Strukturelement 12, 14 befestigte Vorrichtung 16' verstärkt einerseits das Strukturelement 12, 14 und verschliesst andererseits den Hohlraum im Strukturelement 12, 14.

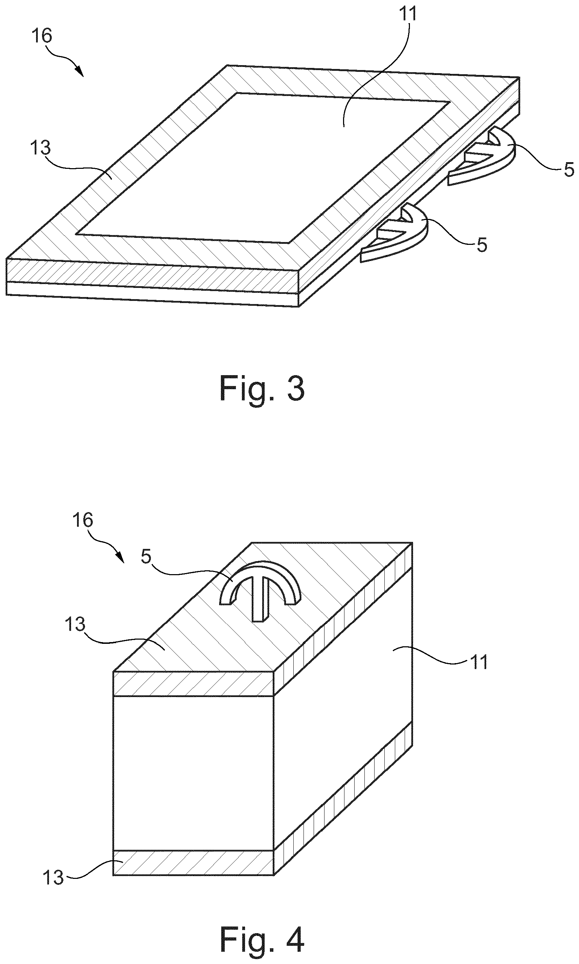

In den Fig. 3 und 4 sind schematisch weitere bekannte Vorrichtungen 16 umfassend einen Träger 11 und ein expandierbares Material 13 dargestellt. Die Vorrichtungen 16 umfassen jeweils ein Befestigungselement 5 zur Vorfixierung der Vorrichtung 16 im Strukturelement 12, 14. Dieses Befestigungselement 5 ist in diesen Ausführungsbeispielen als Clip ausgebildet.

In Fig. 3 sind zwei solche Clips seitlich an einer Seitenfläche des Trägers 11 angeordnet. In Fig. 4 ist ein solcher Clip an einer Deckfläche des Trägers 11 angeordnet, wobei der Clip im expandierbaren Material 13 eingebettet ist.

Insbesondere bei Ausführungsformen wie im Beispiel gemäss Fig. 4 dargestellt ist es nachteilig, dass das expandierbare Material 13 beim Anbringen auf den Träger 11 am Clip nicht wie vorgesehen angebracht werden kann. Beim Spritzgussverfahren, welches typischerweise für solche Vorrichtungen angewendet wird, besteht die Tendenz, dass das expandierbare Material 13 bei Giessen unkontrolliert am Clip hochsteigt. Dies kann sich beim weiteren Verfahren nachteilig auswirken, beispielsweise beim Entformen.

Aus WO 01/83206 A1 ist ein Baffle bekannt, bei welchem ein Clip an einer Seitenkante eines Trägers angeordnet ist.

Aus EP 1 391 368 A2 ist ebenfalls ein Baffle bekannt, bei welchem ein Clip an einer Seitenkante eines Trägers angeordnet ist.

Der Erfindung liegt daher die Aufgabe zugrunde, eine verbesserte Vorrichtung zur Verstärkung, Abdichtung oder Dämpfung eines Strukturelementes zur Verfügung zu stellen, welches die oben genannten Nachteile nicht aufweist. Insbesondere soll die Vorrichtung im Bereich eines Befestigungselementes hinsichtlich einer Herstellung der Vorrichtung, namentlich hinsichtlich einer Anbringung des expandierbaren Materiales auf den Träger, verbessert werden.

Diese Aufgabe wird gelöst durch eine Vorrichtung zur Verstärkung, Abdichtung oder Dämpfung eines Strukturelementes in einem Kraftfahrzeug, umfassend: einen Träger mit einem Befestigungselement zur Vorfixierung der Vorrichtung im Strukturelement; und einen auf dem Träger angeordneten expandierbaren Klebstoff zur Verbindung des Trägers mit dem Strukturelement; wobei das Befestigungselement auf einer Erhebung des Trägers angeordnet ist, wobei sich die Erhebung von einer umliegenden Oberfläche des Trägers abhebt, und wobei der expandierbare Klebstoff zumindest um diese Erhebung herum auf der umliegenden Oberfläche des Trägers angeordnet ist.

Diese Lösung hat den Vorteil, dass dadurch beim Anbringen (insbesondere Spritzgiessen) des expandierbaren Klebstoffes auf dem Träger der Klebstoff durch die Erhebung vom Befestigungselement ferngehalten wird. Bei geeigneter Dimensionierung der Erhebung kann der Klebstoff um die Erhebung herum fließen, ohne jedoch über die Erhebung zu fliessen. Damit kann ein Kontakt des Klebstoffes mit dem Clip, und die damit verbundenen Schwierigkeiten, verhindert werden.

Ein Kerngedanke der vorliegenden Erfindung ist es, dass es nicht zwingend notwendig ist, den expandierbaren Klebstoff flächendeckend im Bereich des Befestigungselementes anzuordnen. Durch das erfindungsgemässe Anheben des Befestigungselementes aus der Ebene der direkt umliegenden Trägeroberfläche lassen sich oben beschriebenen Schwierigkeiten vermeiden.

In einer beispielhaften Ausführungsform ist eine Deckfläche der Erhebung frei von expandierbarem Klebstoff.

In einer beispielhaften Ausführungsform hat die Erhebung eine Höhe von zumindest 1 mm, sodass die Deckfläche der Erhebung zumindest 1 mm über der umliegenden Oberfläche des Trägers (11) liegt. In einer beispielhaften Weiterbildung beträgt die Höhe zumindest 1,2 mm oder zumindest 1,4 mm oder zumindest 1,6 mm oder zumindest 1,8 mm oder zumindest 2 mm.

In einer beispielhaften Ausführungsform hat die Erhebung eine Höhe von höchstens 10 mm hat, sodass die Deckfläche der Erhebung höchstens 10 mm über der umliegenden Oberfläche des Trägers liegt. In einer beispielhaften Weiterbildung beträgt die Höhe höchstens 9 mm oder höchstens 8 mm oder höchstens 7 mm oder höchstens 6 mm oder höchstens 5 mm.

Je nach gewünschter Schichtdicke des expandierbaren Klebstoffes kann die Höhe der Erhebung an die jeweiligen Anforderungen angepasst werden.

In einer beispielhaften Ausführungsform hat die Erhebung eine Breite von 5 mm bis 20 mm, bevorzugt von 6 mm bis 17 mm, besonders bevorzugt von 7 mm bis 15 mm.

In einer beispielhaften Ausführungsform hat die Erhebung eine Länge von 5 mm bis 30 mm, bevorzugt von 7 mm bis 25 mm, besonders bevorzugt von 8 mm bis 20 mm.

In einer beispielhaften Ausführungsform hat die Erhebung im Wesentlichen drei oder vier Seitenflächen.

Somit kann die Erhebung beispielsweise einen im Wesentlichen dreieckigen oder viereckigen Grundriss haben.

Dies hat den Vorteil, dass dadurch ein Entformen des Trägers mit der Erhebung einfacher möglich ist, als dies bei komplizierteren Grundrissen der Erhebung der Fall wäre. Beispielsweise kann eine solche Grundform der Erhebung bei geeigneter Anordnung durch seitliches Verschieben und anschliessendes Abziehen entformt werden.

In einer beispielhaften Ausführungsform ist zumindest eine der Seitenflächen der Erhebung senkrecht zur umliegenden Oberfläche des Trägers ausgebildet.

In einer beispielhaften Ausführungsform ist zumindest eine der Seitenflächen der Erhebung geneigt ausgebildet, sodass die Erhebung in diesem Bereich einen Überhang bildet über die umliegende Oberfläche des Trägers bzw. sodass ein Querschnitt des Trägers in diesem Bereich einen Hinterschnitt aufweist.

Dies hat den Vorteil, dass dadurch eine markant bessere Befestigung des expandierbaren Klebstoffes auf dem Träger erreicht werden kann. Durch den Hinterschnitt verbessert sich die Anbindung des Klebstoffes sowohl vor der Expansion, als auch während und nach der Expansion. Der Hinterschnitt verzahnt dabei den Klebstoff und den Träger mechanisch miteinander.

In einer beispielhaften Ausführungsform sind zwei oder drei der Seitenflächen der Erhebung geneigt ausgebildet, sodass die Erhebung in diesen Bereichen einen Überhang bildet über die umliegende Oberfläche des Trägers bzw. sodass ein Querschnitt des Trägers in diesen Bereichen einen Hinterschnitt aufweist, und wobei die restlichen Seitenflächen der Erhebung so ausgebildet sind, dass die Erhebung in diesen Bereichen keinen Überhang bildet über die umliegende Oberfläche des Trägers bzw. sodass ein Querschnitt des Trägers in diesen Bereichen keinen Hinterschnitt aufweist.

Dies hat den Vorteil, dass dadurch eine weiter verbesserte Anbindung des Klebstoffes an den Träger erzielbar ist. Die Ausführungsvariante mit drei hinterschnittenen Seitenflächen ist besonders vorteilhaft, weil dabei eine bestmögliche Anbindung des Klebstoffes an den Träger bei gleichzeitig beibehaltener Entformbarkeit vom Spritzgusswerkzeug gewährleistet wird.

In einer beispielhaften Ausführungsform ist der expandierbare Klebstoff derart auf der umliegenden Oberfläche des Trägers angeordnet, dass der expandierbare Klebstoff an allen Seitenflächen der Erhebung anliegt.

Dies hat den Vorteil, dass dadurch wiederum eine Anbindung des Klebstoffes an den Träger verbessert wird.

In einer beispielhaften Ausführungsform sind der Träger und das Befestigungselement einstückig ausgebildet.

Dies hat den Vorteil, dass dadurch eine kostenoptimierte Vorrichtung zur Verfügung gestellt werden kann.

Erfindungsgemäß ist das Befestigungselement als Clip ausgebildet, wobei der Clip zur Vorfixierung der Vorrichtung im Strukturelement in eine Öffnung im Strukturelement einrastbar ist.

Weiter erfindungsgemäß hat der Clip auf einer Achse einen ersten Flügel, einen zweiten Flügel und eine Basis, und wobei diese Achse im Wesentlichen parallel ist zu einer Seitenfläche der Erhebung, welche keinen Überhang bzw. keinen Hinterschnitt aufweist.

Dies hat den Vorteil, dass dadurch eine Entformbarkeit der Vorrichtung von einem Spritzgusswerkzeug gewährleistet werden kann.

In einer beispielhaften Ausführungsform bildet der expandierbare Klebstoff ein einziges zusammenhängendes Element. In einer alternativen Ausführungsform bilden mehrere nicht zusammenhängende expandierbare Klebstoffe mehrere nicht zusammenhängende Elemente.

In einer beispielhaften Ausführungsform hat der expandierbare Klebstoff eine Expansionsrate von 300 bis 3000%. In einer beispielhaften Weiterbildung hat der expandierbare Klebstoff eine Expansionsrate von 1000 und 2700% bzw. zwischen 1500 und 2500%.

Ein beispielhaftes Material mit einer solchen Expansionsrate ist unter dem Handelsnamen SikaBaffle^{®} 450 erhältlich.

In einer alternativen Ausführungsform hat der expandierbare Klebstoff eine Expansionsrate von 50 bis 500%. In einer beispielhaften Weiterbildung hat der expandierbare Klebstoff eine Expansionsrate von 70 und 400% bzw. zwischen 100 und 300%.

Ein beispielhaftes Material mit einer solchen Expansionsrate ist unter dem Handelsnamen SikaReinforcer^{®} 450 erhältlich.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann der Träger einen beliebigen Aufbau und eine beliebige Struktur aufweisen. Er kann beispielsweise massiv, hohl, oder geschäumt sein oder eine gitterartige Struktur aufweisen. Die Oberfläche des Trägers kann typischerweise glatt, rau oder strukturiert sein.

Bei erfindungsgemässen Abdichtungs- und Verstärkungselementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerelement, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht das Trägerelement aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

In einer beispielhaften Ausführungsform ist der expandierbare Klebstoff durch ein Spritzgussverfahren auf dem Träger angeordnet.

In einer beispielhaften Ausführungsform ist der Träger durch ein Spritzgussverfahren hergestellt.

In einer beispielhaften Ausführungsform umfasst der Träger einen Kunststoff, insbesondere Polyamid.

Die eingangs gestellte Aufgabe wird weiterhin gelöst durch ein System eines verstärkten, abgedichteten oder gedämpften Strukturelementes in einem Kraftfahrzeug, das System umfassend: ein Strukturelement; eine Vorrichtung nach obiger Beschreibung, wobei die Vorrichtung im Strukturelement angeordnet ist; und wobei der Klebstoff expandiert ist und den Träger und das Strukturelement miteinander verbindet.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: schematische Darstellungen einer beispielhaften Vorrichtung gemäss Stand der Technik;
- Fig. 3 und 4: schematische Darstellung einer beispielhaften Vorrichtung gemäss Stand der Technik;
- Fig. 5: schematische Darstellung eines Querschnittes einer beispielhaften Vorrichtung im Bereich eines Befestigungselementes; und
- Fig. 6: schematische räumliche Darstellung eines beispielhaften Trägers im Bereich eines Befestigungselementes.

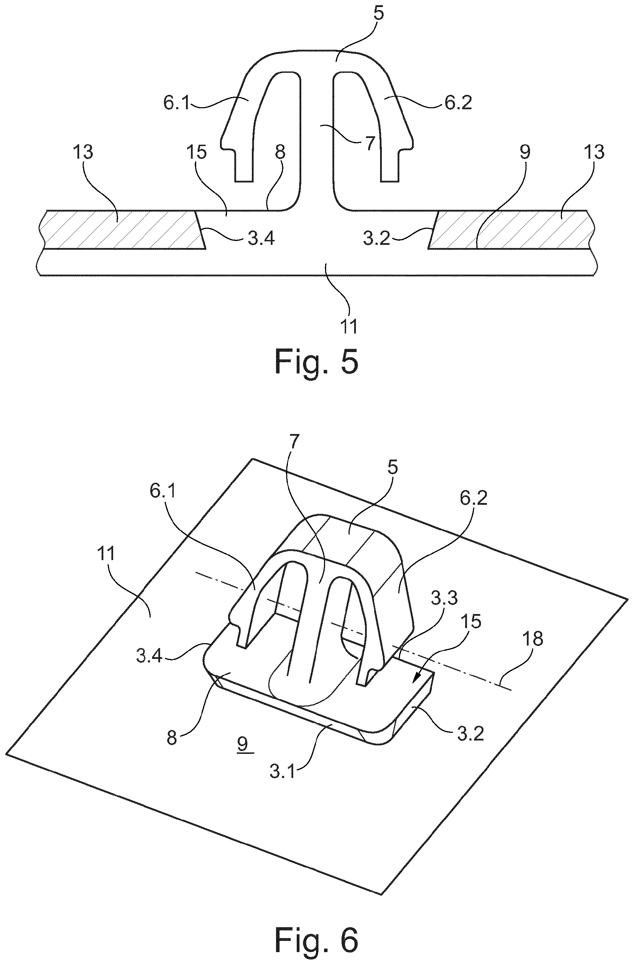

In Fig. 5 ist eine beispielhafte Vorrichtung im Bereich eines Befestigungselementes 5 im Querschnitt dargestellt. Das Befestigungselement 5 ist in diesem Ausführungsbeispiel als Clip ausgebildet und hat einen ersten Flügel 6.1, einen zweiten Flügel 6.2 und eine Basis 7, an welcher die Flügel 6.1, 6.2 befestigt sind.

Das Befestigungselement 5 ist auf einer Erhebung 15 angeordnet, welche sich über eine umliegende Oberfläche 9 des Trägers 11 erhebt. Die Erhebung 9 hat dabei eine Deckfläche 8, auf welcher das Befestigungselement 5 angeordnet ist, und Seitenflächen 3.2,3.4.

Die Seitenflächen 3.2, 3.4 sind dabei mit einem Hinterschnitt ausgebildet, sodass die Erhebung 15 in diesem Bereich einen Überhang bildet über die umliegende Oberfläche 9 des Trägers 11.

Auf der umliegenden Oberfläche 9 des Trägers 11 ist der expandierbare Klebstoff 13 angeordnet. Durch den Hinterschnitt der Erhebung 15 sind der expandierbare Klebstoff 13 und der Träger 11 mechanisch miteinander verzahnt. Dies verbessert eine Anbindung des expandierbaren Klebstoffes 13 am Träger 11 vor, während und nach einer Expansion des Klebstoffes 13.

In Fig. 6 ist schematische ein beispielhafter Träger 11 im Bereich eines Befestigungselementes 5 räumlich dargestellt. Dabei ist der Träger 11 ohne expandierbarer Klebstoff gezeigt.

In diesem Beispiel hat die Erhebung 15 im Wesentlichen vier Seitenflächen 3.1, 3.2, 3.3, 3.4, wobei drei Seitenflächen 3.1, 3.2, 3.4 mit einem Hinterschnitt ausgebildet sind und die verbleibende Seitenfläche 3.3 ist nicht mit Hinterschnitt ausgebildet. So wird eine Entformbarkeit des Trägers 11 beim Spritzgiessen gewahrt.

Hier ist weiterhin ersichtlich, dass die Basis 7 und die Flügel 6.1, 6.2 des Clips entlang einer Achse 18 angeordnet sind. Diese Achse 18 liegt dabei im Wesentlichen parallel zur Seitenfläche 3.3 der Erhebung 15, welche nicht mit Hinterschnitt ausgebildet ist.

## Patentansprüche

1. Vorrichtung (16) zur Verstärkung, Abdichtung oder Dämpfung eines Strukturelementes (12, 14) in einem Kraftfahrzeug, umfassend:
einen Träger (11) mit einem Befestigungselement (5) zur Vorfixierung der Vorrichtung (16) im Strukturelement (12, 14); und
einen auf dem Träger (11) angeordneten expandierbaren Klebstoff (13) zur Verbindung des Trägers (11) mit dem Strukturelement (12, 14);
wobei das Befestigungselement (5) auf einer Erhebung (15) des Trägers (11) angeordnet ist, wobei sich die Erhebung (15) von einer umliegenden Oberfläche (9) des Trägers (11) abhebt, und wobei der expandierbare Klebstoff (13) zumindest teilweise um diese Erhebung (15) herum auf der umliegenden Oberfläche (9) des Trägers (11) angeordnet ist,
wobei das Befestigungselement (5) als Clip ausgebildet ist, wobei der Clip zur Vorfixierung der Vorrichtung (16) im Strukturelement (12, 14) in eine Öffnung im Strukturelement (12, 14) einrastbar ist,
**dadurch gekennzeichnet, dass** der Clip auf einer Achse (18) einen ersten Flügel (6.1), einen zweiten Flügel (6.2) und eine Basis (7) hat, und dass diese Achse (18) im Wesentlichen parallel ist zu einer Seitenfläche (3.3) der Erhebung (15), welche keinen Überhang bzw. keinen Hinterschnitt aufweist.

2. Vorrichtung nach Anspruch 1, wobei eine Deckfläche (8) der Erhebung (15) frei ist von expandierbarem Klebstoff (13).

3. Vorrichtung nach einem der vorhergehenden Ansprüche, wobei die Erhebung (15) eine Höhe von zumindest 1 mm hat, sodass die Deckfläche (8) der Erhebung (15) zumindest 1 mm über der umliegenden Oberfläche (9) des Trägers (11) liegt; und/oder wobei die Erhebung (15) eine Höhe von höchstens 10 mm hat, sodass die Deckfläche (8) der Erhebung (15) höchstens 10 mm über der umliegenden Oberfläche (9) des Trägers (11) liegt.

4. Vorrichtung nach einem der vorhergehenden Ansprüche, wobei die Erhebung (15) im Wesentlichen drei oder vier Seitenflächen (3.1, 3.2, 3.3, 3.4) hat.

5. Vorrichtung nach einem der vorhergehenden Ansprüche, wobei zumindest eine der Seitenflächen (3.1, 3.2, 3.3, 3.4) der Erhebung (15) senkrecht zur umliegenden Oberfläche (9) des Trägers (11) ausgebildet ist.

6. Vorrichtung nach einem der vorhergehenden Ansprüche, wobei zumindest eine der Seitenflächen (3.1, 3.2, 3.3, 3.4) der Erhebung (15) geneigt ausgebildet ist, sodass die Erhebung (15) in diesem Bereich einen Überhang bildet über die umliegende Oberfläche (9) des Trägers (11) bzw. sodass ein Querschnitt des Trägers (11) in diesem Bereich einen Hinterschnitt aufweist.

7. Vorrichtung nach Anspruch 6, wobei zwei oder drei der Seitenflächen (3.1, 3.2, 3.3, 3.4) der Erhebung (15) geneigt ausgebildet sind, sodass die Erhebung (15) in diesen Bereichen einen Überhang bildet über die umliegende Oberfläche (9) des Trägers (11) bzw. sodass ein Querschnitt des Trägers (11) in diesen Bereichen einen Hinterschnitt aufweist, und wobei die restlichen Seitenflächen (3.1, 3.2, 3.3, 3.4) der Erhebung (15) so ausgebildet sind, dass die Erhebung (15) in diesen Bereichen keinen Überhang bildet über die umliegende Oberfläche (9) des Trägers (11) bzw. sodass ein Querschnitt des Trägers (11) in diesen Bereichen keinen Hinterschnitt aufweist.

8. Vorrichtung nach einem der vorhergehenden Ansprüche, wobei der expandierbare Klebstoff (13) derart auf der umliegenden Oberfläche (9) des Trägers (11) angeordnet ist, dass der expandierbare Klebstoff (13) an allen Seitenflächen (3.1, 3.2, 3.3, 3.4) der Erhebung (15) anliegt.

9. Vorrichtung nach einem der vorhergehenden Ansprüche, wobei der expandierbare Klebstof (13) durch ein Spritzgussverfahren auf dem Träger (11) angeordnet ist.

10. Vorrichtung nach Anspruch 9, wobei der Träger (11) durch ein Spritzgussverfahren hergestellt ist.

11. Vorrichtung nach einem der vorhergehenden Ansprüche, wobei der Träger (11) einen Kunststoff, insbesondere Polyamid, umfasst.

12. Vorrichtung nach einem der vorhergehenden Ansprüche, wobei der Träger (11) und das Befestigungselement (5) einstückig ausgebildet sind.

13. System (1) eines verstärkten, abgedichteten oder gedämpften Strukturelementes (12, 14) in einem Kraftfahrzeug, das System umfassend:
ein Strukturelement (12, 14);
eine Vorrichtung (16) nach einem der Ansprüche 1 bis 12, wobei die Vorrichtung (16) im Strukturelement (12, 14) angeordnet ist; und
wobei der Klebstoff (13') expandiert ist und den Träger (11) und das Strukturelement (12, 14) miteinander verbindet.

## Claims

1. Device (16) for reinforcing, sealing or damping a structural element (12, 14) in a motor vehicle, comprising:
a support (11) having a fastening element (5) for prefixing the device (16) in the structural element (12, 14); and
an expandable adhesive (13) arranged on the support (11) for connecting the support (11) to the structural element (12, 14);
wherein the fastening element (5) is arranged on an elevation (15) of the support (11), wherein the elevation (15) is raised from a surrounding surface (9) of the support (11), and wherein the expandable adhesive (13) is arranged at least partially around said elevation (15) on the surrounding surface (9) of the support (11),
wherein the fastening element (5) is configured as a clip, wherein the clip for prefixing the device (16) in the structural element (12, 14) is able to be latched in an opening in the structural element (12, 14),
**characterized in that** the clip on an axis (18) has a first wing (6.1), a second wing (6.2) and a base (7), and **in that** this axis (18) is substantially parallel to a side surface (3.3) of the elevation (15) that does not have an overhang or undercut.

2. Device according to Claim 1, wherein a cover surface (8) of the elevation (15) is free of expandable adhesive (13).

3. Device according to one of the preceding claims, wherein the elevation (15) has a height of at least 1 mm, so that the cover surface (8) of the elevation (15) is at least 1 mm above the surrounding surface (9) of the support (11); and/or wherein the elevation (15) has a height of at most 10 mm, so that the cover surface (8) of the elevation (15) is at most 10 mm above the surrounding surface (9) of the support (11).

4. Device according to one of the preceding claims, wherein the elevation (15) has substantially three or four side surfaces (3.1, 3.2, 3.3, 3.4).

5. Device according to one of the preceding claims, wherein at least one of the side surfaces (3.1, 3.2, 3.3, 3.4) of the elevation (15) is configured so as to be perpendicular to the surrounding surface (9) of the support (11).

6. Device according to one of the preceding claims, wherein at least one of the side surfaces (3.1, 3.2, 3.3, 3.4) of the elevation (15) is configured so as to be inclined, so that the elevation (15) in this region forms an overhang over the surrounding surface (9) of the support (11), or so that a cross section of the support (11) in this region has an undercut.

7. Device according to Claim 6, wherein two or three of the side surfaces (3.1, 3.2, 3.3, 3.4) of the elevation (15) are configured so as to be inclined, so that the elevation (15) in these regions forms an overhang over the surrounding surface (9) of the support (11), or so that a cross section of the support (11) in these regions has an undercut, and wherein the remaining side surfaces (3.1, 3.2, 3.3, 3.4) of the elevation (15) are configured so that the elevation (15) in these regions does not form an overhang over the surrounding surface (9) of the support (11), or so that a cross section of the support (11) in these regions does not have an undercut.

8. Device according to one of the preceding claims, wherein the expandable adhesive (13) is arranged on the surrounding surface (9) of the support (11) in such a manner that the expandable adhesive (13) bears on all side surfaces (3.1 3.2, 3.3, 3.4) of the elevation (15).

9. Device according to one of the preceding claims, wherein the expandable adhesive (13) is arranged on the support (11) by an injection moulding process.

10. Device according to Claim 9, wherein the support (11) is produced by an injection moulding method.

11. Device according to one of the preceding claims, wherein the support (11) comprises a plastics material, in particular polyamide.

12. Device according to one of the preceding claims, wherein the support (11) and the fastening element (5) are configured so as to be integral.

13. System (1) of a reinforced, sealed or damped structural element (12, 14) in a motor vehicle, the system comprising:
a structural element (12, 14);
a device (16) according to one of Claims 1 to 12, wherein the device (16) is arranged in the structural element (12, 14); and
wherein the adhesive (13') is expanded and connects the support (11) and the structural element (12, 14) to one another.

## Revendications

1. Dispositif (16) pour le renforcement, l'étanchéification ou l'amortissement d'un élément structural (12, 14) dans un véhicule automobile, comprenant :
un support (11) avec un élément de fixation (5) pour la fixation préliminaire du dispositif (16) dans l'élément structural (12, 14) ; et
un adhésif expansible (13) agencé sur le support (11) pour la liaison du support (11) à l'élément structural (12, 14) ;
l'élément de fixation (5) étant agencé sur une surélévation (15) du support (11), la surélévation (15) se soulevant à partir d'une surface environnante (9) du support (11), et l'adhésif expansible (13) étant agencé au moins partiellement autour de cette surélévation (15) sur la surface environnante (9) du support (11),
l'élément de fixation (5) étant configuré sous forme de clip, le clip pouvant être enclenché dans une ouverture dans l'élément structural (12, 14) pour la fixation préliminaire du dispositif (16) dans l'élément structural (12, 14),
**caractérisé en ce que** le clip a sur un axe (18) une première aile (6.1), une deuxième aile (6.2) et une base (7), et **en ce que** cet axe (18) est essentiellement parallèle à une surface latérale (3.3) de la surélévation (15), qui ne présente pas de surplomb ou de contre-dépouille.

2. Dispositif selon la revendication 1, une surface supérieure (8) de la surélévation (15) étant exempte d'adhésif expansible (13).

3. Dispositif selon l'une quelconque des revendications précédentes, la surélévation (15) ayant une hauteur d'au moins 1 mm, de telle sorte que la surface supérieure (8) de la surélévation (15) se situe au moins 1 mm au-dessus de la surface environnante (9) du support (11) ; et/ou la surélévation (15) ayant une hauteur d'au plus 10 mm, de telle sorte que la surface supérieure (8) de la surélévation (15) se situe au plus 10 mm au-dessus de la surface environnante (9) du support (11).

4. Dispositif selon l'une quelconque des revendications précédentes, la surélévation (15) ayant essentiellement trois ou quatre surfaces latérales (3.1, 3.2, 3.3, 3.4).

5. Dispositif selon l'une quelconque des revendications précédentes, au moins l'une des surfaces latérales (3.1, 3.2, 3.3, 3.4) de la surélévation (15) étant configurée perpendiculairement à la surface environnante (9) du support (11).

6. Dispositif selon l'une quelconque des revendications précédentes, au moins l'une des surfaces latérales (3.1, 3.2, 3.3, 3.4) de la surélévation (15) étant configurée sous forme inclinée de telle sorte que la surélévation (15) forme dans cette zone un surplomb au-dessus de la surface environnante (9) du support (11) ou de telle sorte qu'une section transversale du support (11) présente une contre-dépouille dans cette zone.

7. Dispositif selon la revendication 6, deux ou trois des surfaces latérales (3.1, 3.2, 3.3, 3.4) de la surélévation (15) étant configurées sous forme inclinée, de telle sorte que la surélévation (15) forme dans ces zones un surplomb au-dessus de la surface environnante (9) du support (11) ou de telle sorte qu'une section transversale du support (11) présente une contre-dépouille dans ces zones, et les surfaces latérales restantes (3.1, 3.2, 3.3, 3.4) de la surélévation (15) étant configurées de telle sorte que la surélévation (15) ne forme pas dans ces zones de surplomb au-dessus la surface environnante (9) du support (11) ou de telle sorte qu'une section transversale du support (11) ne présente pas de contre-dépouille dans ces zones.

8. Dispositif selon l'une quelconque des revendications précédentes, l'adhésif expansible (13) étant agencé sur la surface environnante (9) du support (11) de telle sorte que l'adhésif expansible (13) s'applique sur toutes les surfaces latérales (3.1, 3.2, 3.3, 3.4) de la surélévation (15).

9. Dispositif selon l'une quelconque des revendications précédentes, l'adhésif expansible (13) étant agencé sur le support (11) par un procédé de moulage par injection.

10. Dispositif selon la revendication 9, le support (11) étant fabriqué par un procédé de moulage par injection.

11. Dispositif selon l'une quelconque des revendications précédentes, le support (11) comprenant une matière plastique, notamment du polyamide.

12. Dispositif selon l'une quelconque des revendications précédentes, le support (11) et l'élément de fixation (5) étant configurés d'un seul tenant.

13. Système (1) d'un élément structural renforcé, étanchéifié ou amorti (12, 14) dans un véhicule automobile, le système comprenant :
un élément structural (12, 14) ;
un dispositif (16) selon l'une quelconque des revendications 1 à 12, le dispositif (16) étant agencé dans l'élément structural (12, 14) ; et
l'adhésif (13') étant expansé et reliant le support (11) et l'élément structural (12, 14) l'un à l'autre.
